# EUROPEAN PATENT SPECIFICATION

(11) **EP 3 810 368 B1**
(45) Date of publication and mention of the grant of the patent: **23.02.2022**
(21) Application number: 19744892.1
(22) Date of filing: 20.06.2019
(51) Int. Cl.: B25B 29/02

(54) **TOOL FOR TIGHTENING NUT ON A BOLT TO FORM A FIXED CONNECTION**
WERKZEUG ZUM ANZIEHEN EINER MUTTER AUF EINEM BOLZEN ZUR BILDUNG EINER FESTEN VERBINDUNG
OUTIL PERMETTANT DE SERRER UN ÉCROU SUR UN BOULON POUR FORMER UNE LIAISON FIXE

(30) Priority: 20.06.2018 NO 20180870
(43) Date of publication of application: 28.04.2021
(73) Proprietor: Quicktorc AS, 4842 Arendal (NO)
(72) Inventor: KAROLIUSSEN, Hilberg Inge, 4817 His (NO)
(74) Representative: Oslo Patentkontor AS
(86) International application number: PCT/NO2019/050131
(87) International publication number: WO 2019/245384

(56) References cited:
- WO-A2-2008/092768
- CN-U- 204 151 637
- DE-A1- 2 328 444
- US-A1- 2011 048 176

## Description

### FIELD OF INVENTION

The invention relates to a tool for tightening nuts on bolts according to the preamble of claim 1. Such tool is known from CN204151637U.

### BACKGROUND

Tools most known for such use are Fixed Wrenches and Spanner Wrenches that are used where there are no given requirements on the tightening torque and accuracy of the tightening. But for example, something as common as wheel nuts on vehicles requires more accuracy, so here the last step of the tightening is done is by means of torque wrenches.

In machines and pipe connections in the offshore and process industries, the requirements for accurate tightening of bolts are often very strict and are performed according to procedures involving both lubricant and how to apply of this onto the threads and the narrow limits for the torque. Nevertheless, it turns out that different tension occurs in the bolts due to the variation in friction between threads and between nut and base material or washer which is typical used.

Some of these known bolt tension tools for tightening the bolts and nuts together in a fixed connection consist of hollow hydraulic cylinders with a mounting surface in the bottom, with a recessed and rotationally free device to retract the nut, as well as an external high-pressure oil pump. When the oil is pressed into the cylinder, the bolt is stretched with a force determined by the pressure and the nut is then screwed on. Then the oil pressure is relieved, and the set is unscrewed for use on the next bolt. With this method one gets even and accurate tension in all the bolts. The application EP3126096 is describing a technology where the tool also having a tension rod which tensioning the bolt. The tension rod here has no simple releasable link for replacing the pipe head. Nor has any integrated mechanism been provided for tightening the nut, which must be tightened and loosened manually with a separate torque rod.

### SUMMARY OF THE INVENTION

The invention is defined in claim 1.

It is an object of the present invention to provide a tool which has all the necessary sequential functions and elements built into it and only need to replace a nozzle assembly to adapt the tool to different bolt and nut sizes, making the tool time efficient and easy to use in line with other hand tools. Said nozzle assembly includes a tensioning shaft and pipe adapted to the particular size of the bolt and nut concerned. To operate in hazardous areas, the tool will preferably only operate with compressed air as a power supply in air-room facilities to avoids the dangers and disadvantages of external high-pressure hydraulic fittings such as hoses and connections.

The inventive tool will be suitable for mounting on remote controlled devices such as robots and underwater vehicles, usually referred to as ROV's. Here the power supply will be hydraulics in the form of water or some type of oil or in the combination. In this embodiment the handle will be replaced with a connector and trigger system suitable.

A preferred embodiment of the tool for tightening the nut on the bolt to form the fixed connection, includes a first motor, a bolt tensioner shaft with internal threads which connects to the bolt, wherein the bolt tensioner shaft is adapted to be rotated by the first motor, a locking claw connecting the bolt tensioner shaft to an upper hydraulic tensioner shaft a hydraulic piston attached to said hydraulic tensioner shaft, an oil pump supplying oil to the hydraulic piston wherein the hydraulic piston is adapted to extend and stretch the bolt when an oil pressure is introduced from the oil pump to the hydraulic piston. A second motor and a pipe which is swivel-connected axially to the bolt tensioner shaft for engaging the nut, wherein the pipe is adapted to be rotated by the second motor.

A more preferred embodiment also including a gear mechanism with first and second gear wheel rotatable mounted on a common gear shaft, wherein the first gear wheel is adapted to transfer rotational motion from the first fluid driven motor to the bolt tensioner shaft and the second gear wheel is adapted to transfer rotational motion from the second fluid driven motor to the pipe.

An even more preferred embodiment including a display system with a microprocessor connected to the said display system, and an oil pressure sensor connected to the microprocessor, wherein the pressure sensor is detecting the oil pressure delivered from the oil pump which is shown on the display.

Most preferred embodiment is further including a fluid pressure sensor detecting the fluid pressure delivered to the first and second fluid driven motors, wherein the first and second motors are powered by a fluid or electricity.

These objects are solved by a tool as disclosed in the appended claims.

### BRIEF DESCRIPTION OF THE DRAWINGS

The invention will now be described in more detail and with reference to the appended in which:

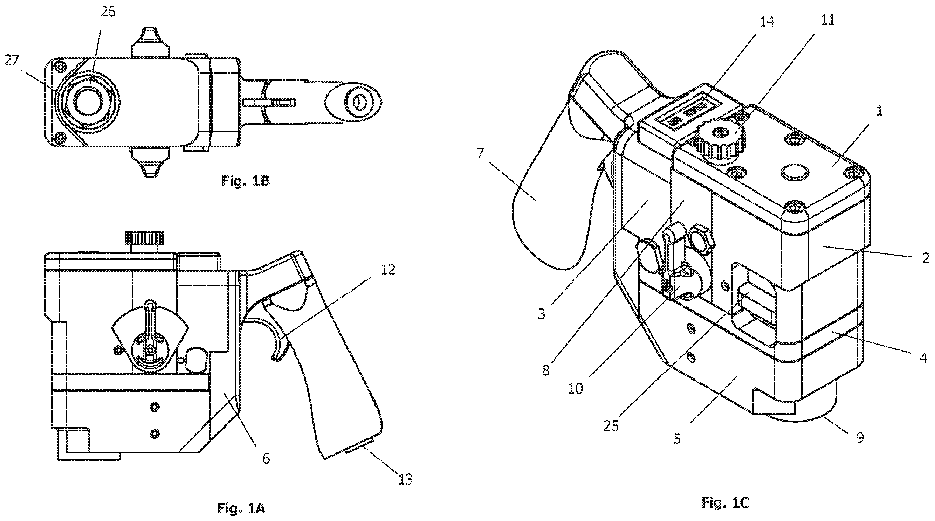

**Fig.1** **A** showing a left side view of the tool.
**Fig.1** **B** showing the tool underneath.
**Fig.1** **C** showing a perspective of the of the tool.
**Fig.2** **A** showing a section view of the cylinder house including the replaceable nozzle.

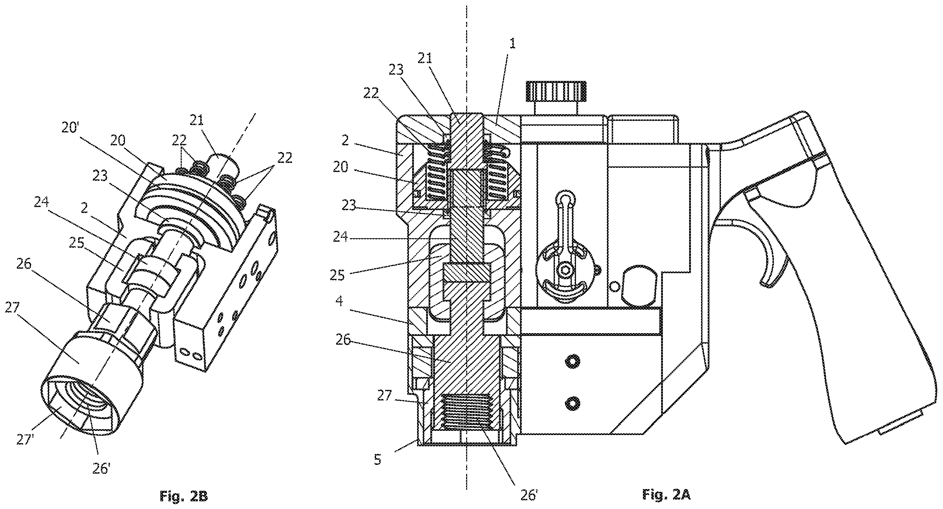

**Fig.2** **B** showing a sub assembly of the mechanism, including the replaceable nozzle.

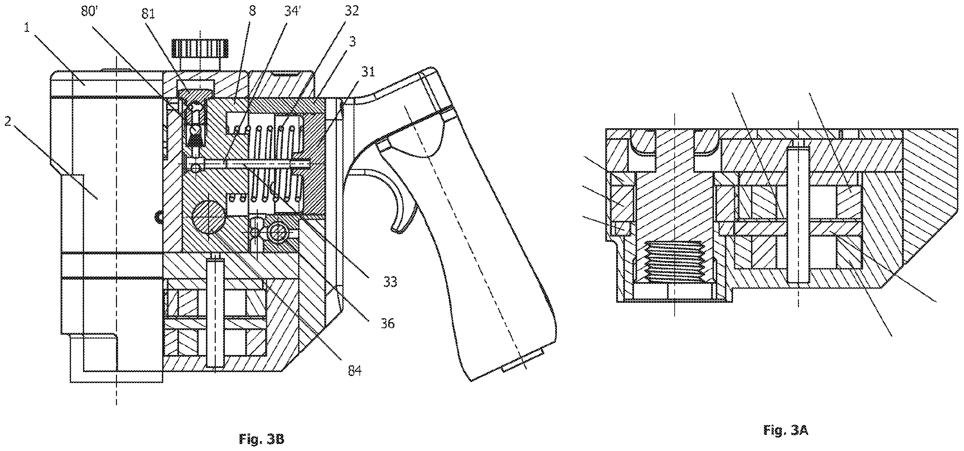

**Fig.3** **A** showing a detail section of the pneumatic house.
**Fig.3** **B** showing the detailed view of the motor house.

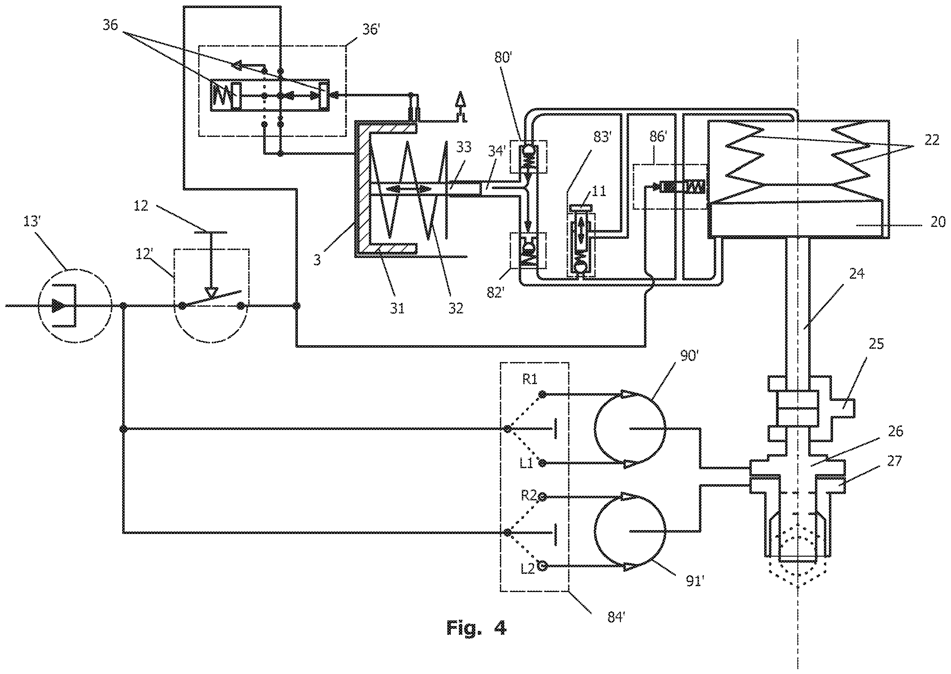

**Fig.4** showing the schematics of the total system.

### DETAILED DESCRIPTION OF THE DRAWINGS

**Figure 1** **A-B-C,** showing the position of; a cap **1** mounted with bolts on top of the cylinder house for hydraulics **2**. cylinder house for air-supply **3** mounted at the rear part of the tool, the middle plate **4** mounted between the said cylinder houses **2, 3** and the air motor house **5** which is the lowest part of the tool and housing the motors.

The rear plate **6** bolted to the said cylinder house for hydraulics **2** thru the said cylinder house for pneumatics **3** and connects the handle **7** to the tool. Valve house **8** is placed between the said cylinder houses **2, 3,** including the operational switch **10** which change the direction of rotation placed with handles on both side of the tool and the Regulator for Maximum Pressure **11** for regulating the power supply pressure where the wheel for regulating the pressure is placed on top right of the top plate **1.** A stub **9** in the very bottom of the construction for direct interface towards the base material or a washer or the like.

A trigger **12** which open and close the valve regulating the power supply flow, as part of the handle **7,** and a power supply coupler **13** which is the connection between the tool and the power supply, and finally a display including a microprocessor adapted to read and analyse sensor data coming from pressure sensors in the power supply system and/or sensors in the hydraulic power system.

Further in the cylinder house for hydraulics **2** a locking claw **25** is provided for enabling the replacement of the nozzle including the bolt tensioner shaft **26** which connects to the bolt and the pipe **27** which rotates the nut.

**Figure 2** **A-B,** showing a detailed view of the said hydraulic cylinder house **2** and every part visualized with numbering.

A hydraulic piston **20** including an O-ring seal **20',** capable of moving in vertical directions, housing Springs **22** providing positive down force. A hydraulic shaft **21** is connected to the said Hydraulic Piston and is sealed both on the upper side and on the bottom side of the hydraulics with Seals **23.** An upper hydraulic tensioner shaft **24** underneath and screwed into the said Hydraulic Piston connects the upper hydraulic system to a locking claw **25.**

This said locking claw connects the said upper hydraulic tensioner shaft **24** with a replaceable bolt tensioner shaft **26.** Said bolt tensioner shaft has an inner thread **26'** which enables the Shaft **26** to be screwed onto a bolt and transfers the force from the tool to the said bolt. A standard sized pipe **27** with standard hexagonal interface **27'** for the nut is swivel connected to the said shaft **26.**

**Figure 3** **A-B,** showing a detailed view of the pneumatic cylinder house **3,** the motor house **5** and every part visualized with numbering.

An air-driven piston **31** activating a Piston **33** which activates an Oil Pump **34'** capable of increasing or decreasing the hydraulic pressure acting on the said hydraulic piston. A Return Spring **32** pushing the said air-driven piston back to the showed start position when no air pressure is acting on the said piston.

A Communicator Pin **36** for controlling the air flow acting on the said air-driven piston. An Inlet Valve **80'** of check valve type, securing the flow. And with a Valve Plug **81** mounted to the top of the air supply cylinder house **3.** And a flow turn pin **84** for directing the air flow.

**Figure 4****,** showing a function and connection diagram for the tool where the operator first adjust the force wanted to stretch the bolts using the wheel **11** on the maximum pressure regulator (**83'**), and placing the tool on the bolt and activate the operational switch in a first position which activates the Air Motor **90'** to screw the tension rod **24** onto the bolt threads at the same time as a fitted pipe **27** enters the nut and turn it to enter the same bolt threads.

Then by actuating a Valve **12'** via the trigger **12,** the internal air-driven hydraulic pump **34'** and start pressing oil into the hydraulic cylinder where a piston **20** pulls the tension bar **24** and extends the bolt while the nut is simultaneously actuated by torque from the air motor **91'.** When the predetermined tension for the bolt is reached, the operational switch is moved to a second position whereby the air motor **90'** goes in reverse.

The trigger **12** is released, whereby the oil pump **34'** stops and the oil pressure is released by the pressure relief valve **86'** opening when the air pressure from the valve **12'** is absent and the tool is unscrewed by the bolt and ready for the next bolt and nut.

## Claims

1. A tool for tightening a nut on a bolt to form a fixed connection by first stretching the bolt with a set force with subsequent screwing on the nut for correct prestress, wherein the tool includes:
a first motor (90'),
a bolt tensioner shaft (26) with internal threads (26') which connects to the bolt, wherein the bolt tensioner shaft is adapted to be rotated by said first motor (90') a hydraulic piston (20),
an oil pump (34') supplying oil to the hydraulic piston (20),
wherein the hydraulic piston is adapted to extend and stretch the bolt when an oil pressure is introduced from the oil pump (34') to the hydraulic piston (20),
a second motor (91'), and
a pipe (27) which is adapted to be rotated by the second motor,
**characterized in that** the hydraulic piston (20) is attached to a hydraulic tensioner shaft (24),
wherein the hydraulic tensioner shaft (24) is connected to said bolt tensioner shaft (26) by a locking claw (25), and wherein the pipe (27) is swivel-connected axially to the bolt tensioner shaft (26) for engaging the nut.

2. A tool according to claim 1, further including a gear mechanism with first and second gear wheel rotatable mounted on a common gear shaft, wherein the first gear wheel is adapted to transfer rotational motion from the first fluid driven motor (90') to the bolt tensioner shaft (26), and the second gear wheel is adapted to transfer rotational motion from the second fluid driven motor (91') to the pipe (27).

3. A tool according to claim 1 or 2, further including a display (14), a microprocessor connected to the display, an oil pressure sensor connected to the microprocessor, wherein the pressure sensor is detecting the oil pressure delivered from the oil pump (34), which is shown on the display.

4. A tool according to any of claims 1 to 3, further including a fluid pressure sensor detecting the fluid pressure delivered to the first and second fluid driven motors (90', 91').

5. A tool according to claim 1, wherein the first and second motors (90', 91') are powered by a fluid or electricity.

## Patentansprüche

1. Werkzeug zum Festziehen einer Mutter an einem Bolzen, um eine feste Verbindung zu bilden, indem zuerst der Bolzen mit einer Feststellkraft mit anschließendem Aufschrauben auf die Mutter für eine korrekte Vorspannung gedehnt wird, wobei das Werkzeug beinhaltet:
einen ersten Motor (90'),
einen Bolzenspannschaft (26) mit Innengewinde (26'), der mit dem Bolzen verbunden ist, wobei der Bolzenspannschaft angepasst ist, von dem ersten Motor (90') gedreht zu werden
einen hydraulischen Kolben (20),
eine Ölpumpe (34'), die dem hydraulischen Kolben (20) Öl zuführt,
wobei der hydraulische Kolben angepasst ist, den Bolzen zu erweitern und zu dehnen, wenn ein Öldruck von der Ölpumpe (34') zu dem hydraulischen Kolben (20) zugeführt wird, einen zweiten Motor (91') und
ein Rohr (27), das angepasst ist, von dem zweiten Motor gedreht zu werden,
**dadurch gekennzeichnet, dass** der hydraulische Kolben (20) an einem hydraulischen Spannschaft (24) befestigt ist, wobei der hydraulische Spannschaft (24) mit dem Bolzenspannschaft (26) durch eine Verriegelungsklaue (25) verbunden ist und wobei das Rohr (27) axial schwenkbar zu dem Bolzenspannschaft (26) für einen Eingriff mit der Mutter verbunden ist.

2. Werkzeug nach Anspruch 1, weiter beinhaltend einen Zahnradmechanismus mit einem ersten und zweiten Zahnrad, die drehbar an einer gemeinsamen Zahnradwelle montiert sind, wobei das erste Zahnrad angepasst ist, Drehbewegung von dem ersten fluidbetriebenen Motor (90') auf den Bolzenspannschaft (26) zu übertragen, und das zweite Zahnrad angepasst ist, Drehbewegung von dem zweiten fluidbetriebenen Motor (91') auf das Rohr (27) zu übertragen.

3. Werkzeug nach Anspruch 1 oder 2, weiter beinhaltend eine Anzeige (14), einen Mikroprozessor, der mit der Anzeige verbunden ist, einen Öldrucksensor, der mit dem Mikroprozessor verbunden ist, wobei der Drucksensor den Öldruck erfasst, der von der Ölpumpe (34) abgegeben wird, der auf der Anzeige gezeigt ist.

4. Werkzeug nach einem der Ansprüche 1 bis 3, weiter beinhaltend einen Fluiddrucksensor, der den Fluiddruck erfasst, der an den ersten und zweiten fluidbetriebenen Motor (90', 91') abgegeben wird.

5. Werkzeug nach Anspruch 1, wobei der erste und zweite Motor (90', 91') durch ein Fluid oder Elektrizität betrieben werden.

## Revendications

1. Outil pour serrer un écrou sur un boulon pour former une liaison fixe en étendant d'abord le boulon avec une force définie avec un vissage ultérieur sur l'écrou pour une prétension correcte, dans lequel l'outil inclut :
un premier moteur (90'),
un arbre de tensionneur de boulon (26) présentant des filets internes (26') qui est relié au boulon, dans lequel l'arbre de tension de boulon est conçu pour être tourné par ledit premier moteur (90'),
un piston hydraulique (20),
une pompe à huile (34') fournissant de l'huile au piston hydraulique (20),
dans lequel le piston hydraulique est conçu pour s'étendre et étendre le boulon lorsqu'une pression d'huile est introduite depuis la pompe à huile (34') dans le piston hydraulique (20), un second moteur (91') et
un tuyau (27) qui est conçu pour être tourné par le second moteur,
**caractérisé en ce que** le piston hydraulique (20) est fixé à un arbre de tensionneur hydraulique (24), dans lequel l'arbre de tensionneur hydraulique (24) est relié au dit arbre de tensionneur de boulon (26) par une griffe de verrouillage (25) et dans lequel le tuyau (27) est relié axialement par émerillon à l'arbre de tensionneur de boulon (26) pour venir en prise avec l'écrou.

2. Outil selon la revendication 1, incluant en outre un mécanisme d'engrenage présentant une première et une seconde roue d'engrenage montées en rotation sur un arbre d'engrenage commun, dans lequel la première roue est conçue pour transférer un mouvement de rotation du premier moteur entraîné par un fluide (90') à l'arbre de tensionneur de boulon (26) et la seconde roue d'engrenage est conçue pour transférer un mouvement de rotation du second moteur entraîné par un fluide (91') au tuyau (27).

3. Outil selon la revendication 1 ou 2, incluant en outre un dispositif d'affichage (14), un microprocesseur relié au dispositif d'affichage, un capteur de pression d'huile relié au microprocesseur, dans lequel le capteur de pression détecte la pression d'huile délivrée depuis la pompe à huile (34) qui est représentée sur le dispositif d'affichage.

4. Outil selon l'une quelconque des revendications 1 à 3, incluant en outre un capteur de pression de fluide détectant la pression de fluide délivrée aux premier et second moteurs entraînés par un fluide (90', 91').

5. Outil selon la revendication 1, dans lequel les premier et second moteurs (90', 91') sont alimentés par un fluide ou l'électricité.
